# FASCICULE DE BREVET EUROPEEN

(11) **EP 3 201 054 B1**
(45) Date de publication et mention de la délivrance du brevet: **18.09.2019**
(21) Numéro de dépôt: 15774591.0
(22) Date de dépôt: 30.09.2015
(51) Int. Cl.: B60R 25/021

(54) **ANTIVOL POUR COLONNE DE DIRECTION DE VEHICULE AUTOMOBILE**
DIEBSTAHLSICHERUNGSVORRICHTUNG FÜR DIE LENKSÄULE EINES KRAFTFAHRZEUGS
ANTITHEFT DEVICE FOR MOTOR VEHICLE STEERING COLUMN

(30) Priorité: 01.10.2014 FR 1459370
(43) Date de publication de la demande: 09.08.2017
(73) Titulaire: U-Shin France, 94000 Créteil (FR)
(72) Inventeur: PERRIN, Christophe, F-94046 Créteil Cedex (FR); POGGI, Patrice, F-94046 Créteil Cedex (FR); DEMPTOS, Philippe, F-94046 Créteil Cedex (FR); TAPIN, Patrick, F-94046 Créteil (FR)
(74) Mandataire: Verriest, Philippe
(86) Numéro de dépôt international: PCT/EP2015/072616
(87) Numéro de publication internationale: WO 2016/050874

(56) Documents cités:
- EP-A1- 0 254 176
- WO-A1-2009/104453
- WO-A1-2012/059424
- AU-B2- 642 452
- DE-A1- 2 713 381
- FR-A5- 2 205 873
- GB-A- 2 376 044
- JP-U- S6 374 359
- US-A- 6 003 349

## Description

La présente invention concerne un verrou pour antivol de colonne de direction de véhicule automobile.

L'invention se rapporte au domaine des verrous et antivols pour colonne de direction de véhicules automobiles destinés, en particulier, à commander le déblocage d'une colonne de direction du véhicule lors de l'allumage du véhicule automobile.

Il est connu que les antivols pour colonne de direction, comprenant au moins, un stator, un rotor et une came, peuvent être maintenus dans des positions bien distinctes grâce à différentes positions angulaires indexées :
- une position angulaire extrémale neutre « Stop », dans laquelle l'antivol verrouille la colonne de direction,
- une position angulaire intermédiaire « Marche », dans laquelle le véhicule est alimenté électriquement, et autorise la mise en route du moteur thermique du véhicule, et
- une position angulaire extrémale active « Démarrage » ou « Start », dans laquelle en plus des fonctions « Marche », le démarreur est alimenté pour mettre en marche le moteur thermique du véhicule.

Bien entendu, d'autres positions peuvent exister comme par exemple la position angulaire intermédiaire « Accessoires », permettant d'alimenter électriquement quelques accessoires, tels que la radio, typiquement disposée entre la position angulaire extrémale neutre « Stop » et la position angulaire intermédiaire « Marche ».

Une fois le moteur mis en fonctionnement, l'antivol est automatiquement ramené de la position « Démarrage » à la position « Marche » par une force de rappel. La position « Marche » est la position utilisée en roulage du véhicule.

Il est connu un système d'indexage mécanique qui permet de maintenir l'ensemble clef / rotor / came en position stable tant qu'une action volontaire de l'utilisateur ne modifie pas cette position pour, par exemple, couper le moteur en tournant la clef de la position « Marche » à la position « Stop ». On appelle « action volontaire de l'utilisateur » une simple rotation de la clef à l'encontre du couple d'indexage, par exemple de l'ordre de 0,2 à 0,4 N.m.

Un premier inconvénient de ce type de verrou est que la clef peut sortir de sa position indexée en cas d'action involontaire du type « coup de genou dans la clef en conduisant ». Dans ce cas, l'antivol peut alors atteindre une position angulaire où les fonctions électriques « Marche » ne sont plus assurées, et provoquer ainsi l'arrêt involontaire du moteur en roulant.

Un second inconvénient de ce type de verrou est que lors d'un démarrage moteur, du fait du retour automatique de la clef en position « marche » par rappel ressort, si la clef est relâchée brutalement sans accompagnement de la main de la position « Démarrage » à la position « Marche », la position indexée « marche » peut être dépassée due à l'inertie de l'ensemble clef / rotor / came. L'antivol est alors positionné dans un angle non indexé (et non stable). Par conséquent, les vibrations de roulage peuvent entrainer l'antivol dans une position angulaire où le contact électrique « Marche » est perdu, impliquant un arrêt involontaire du moteur.

DE 27 13 381 A1 divulgue un antivol de colonne de direction de véhicule automobile.

La présente invention a pour but d'éviter ces problèmes sécuritaires.

A cet effet, la présente invention propose un verrou pour antivol de colonne de direction de véhicule automobile comprenant :
- un stator comprenant une tête de stator dans laquelle est ménagée une ouverture,
- un rotor monté mobile en rotation par rapport au stator autour d'un axe et comprenant une collerette annulaire,
- une came destinée à être solidaire en rotation du rotor,
- un élément élastique agencé entre la came et le rotor pour solliciter axialement ledit rotor en poussée,
dans lequel l'ouverture est conformée pour que sa coopération avec la collerette annulaire bloque la rotation du rotor dans un sens de rotation prédéterminé à partir d'une position angulaire prédéterminée et autorise la rotation du rotor au-delà de la position angulaire prédéterminée par enfoncement préalable du rotor.

Un tel verrou pour antivol de colonne de direction de véhicule automobile propose une nouvelle cinématique du rotor pour passer de la position angulaire intermédiaire « Marche » à la position angulaire extrémale neutre dite « Stop » relative à l'arrêt du moteur. Ainsi, lorsque l'antivol est en position « Marche », l'utilisateur est obligé de pousser la clef pour réaliser la rotation en direction de la position « Stop ».

Si la clef n'est pas poussée, la rotation de celle-ci est impossible. Ainsi il n'est plus possible en cas d'action involontaire du type « coup de genou dans la clef en conduisant » de sortir la clef de sa position indexée en provoquant l'arrêt involontaire du moteur en roulant.

De même, il n'est plus possible de provoquer l'arrêt involontaire du moteur lors du retour automatique de la clef en position « marche » par une force de rappel, lorsque la clef est relâchée brutalement sans accompagnement de la main de la position angulaire extrémale active « Démarrage » à la position « Marche ».

Ainsi, le verrou de l'invention permet de manière simple et très efficace d'éviter les problèmes sécuritaires de l'art antérieur.

Suivant des modes de réalisation préférés, le verrou pour antivol de colonne de direction de véhicule automobile selon l'invention comprend une ou plusieurs des caractéristiques suivantes, prises séparément ou en combinaison :
- la collerette annulaire comprend une extension qui s'étend axialement vers la tête du rotor destinée à recevoir un insert sur un premier secteur angulaire, et
- l'ouverture est sensiblement circulaire et comporte un dégagement pour autoriser le passage de l'extension de la collerette annulaire, le dégagement s'étendant radialement vers l'extérieur de l'ouverture sur un second secteur angulaire et étant conformé pour que sa coopération avec la collerette annulaire retienne axialement le rotor dans la tête du stator ;
- la position angulaire prédéterminée est une position angulaire intermédiaire disposée entre une position angulaire extrémale neutre et une position extrémale angulaire active; et
- l'ouverture est conformée pour que sa coopération avec la collerette annulaire autorise la rotation du rotor dans un sens de rotation contraire au sens de rotation prédéterminé jusqu'à une position angulaire extrémale active, telle que la position démarrage.

Selon un deuxième aspect, l'invention concerne également un antivol de colonne de direction pour véhicule automobile, caractérisé en ce qu'il comporte au moins un verrou tel que défini ci-avant.

Dans le cadre de l'invention, pour un élément s'étendant dans l'espace dans trois directions perpendiculaires, ledit élément est défini comme une extension radiale, à savoir une extension s'étendant radialement, si sa taille dans une direction parallèle à un rayon du rotor est strictement supérieure à sa taille dans les deux autres directions perpendiculaires ; et ledit élément est défini comme une extension axiale , à savoir une extension s'étendant axialement, si sa taille dans une direction parallèle à l'axe de rotation du rotor est strictement supérieure à sa taille dans les deux autres directions perpendiculaires.

D'autres caractéristiques et avantages de l'invention apparaîtront à la lecture de la description qui suit d'un mode de réalisation préféré de l'invention, donné à titre d'exemple non limitatif et en référence aux dessins annexés sur lesquels :
- la figure 1 représente une vue en perspective d'un antivol de colonne de direction de véhicule automobile,
- la figure 2 représente une vue en éclaté du verrou de l'antivol de la figure 1,
- la figure 3 illustre une vue en perspective du rotor du verrou de la figure 2,
- la figure 4 illustre une vue en perspective de la tête de stator de la figure 2,
- les figures 5 et 6 représentent des vues en coupe du verrou de la figure 2 respectivement lorsque le rotor est dans une position dite « rentrée » et une position dite « sortie »,
- la figure 7 illustre une vue en perspective du verrou de la figure 2 avec le rotor du verrou en position « sortie »,
- les figures 8 et 9 représentent des vues en coupe du verrou de la figure 2 respectivement lorsque le verrou est en position « Stop », « Marche », et
- la figure 10 représente une vue analogue à la figure 9, le conducteur appuyant le rotor pour passer de la position « Marche » à la position « Stop » pour pouvoir retirer la clé.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

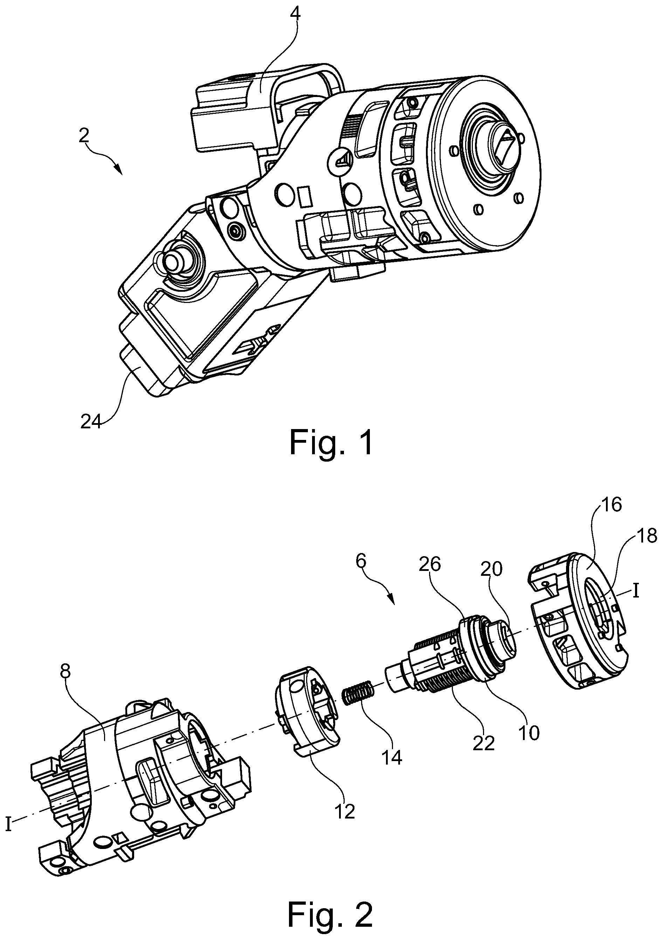

La figure 1 illustre un antivol 2 de colonne de direction, à verrou insérable, destiné à être monté dans un véhicule automobile pour en sécuriser la direction. L'antivol 2 comprend un corps d'antivol 4 à l'intérieur duquel un verrou 6 est destiné à être inséré et solidarisé.

Comme représenté sur la vue en éclaté de la figure 2, le verrou 6 comporte un stator 8, un rotor 10, une came 12 et un élément élastique 14.

Le stator 8 comprend une tête de stator 16. La tête du stator 16 peut être solidarisée au corps d'antivol 4. A l'avant, une ouverture 18 est ménagée dans la tête de rotor pour permettre l'accès à la tête du rotor. A l'arrière, la tête de stator 16 présente un logement de forme adaptée pour recevoir le rotor 10, par exemple de forme générale cylindrique.

Le rotor 10 est monté mobile en rotation par rapport au stator autour d'un axe noté I-I. Le rotor est susceptible d'être mobile en rotation axiale autour de cet axe I-I par entraînement en rotation d'un insert de clé pour commander un moyen de verrouillage de l'antivol 2.

Le rotor 10 présente une entrée de clé 20 ménagée à l'extrémité avant également appelée tête de rotor. Il est entendu que, dans l'ensemble de ce texte, le terme rotor désigne très généralement tout sous-ensemble comprenant un corps de rotor à travers lequel sont ménagés des fentes radiales 22 à même de recevoir des paillettes qui sont montées mobiles en translation radiale et qui sont couplées à des ressorts de rappel les entraînant en permanence dans des positions saillantes par rapport au corps du rotor. Les paillettes permettent la libération du rotor lorsqu'un insert de clé correspondant au codage formé par la disposition des paillettes est introduit dans le rotor.

La rotation de la clé est susceptible d'entraîner la rotation du rotor 5 dans une première position angulaire extrême neutre, dite position neutre, comme la position « stop », deux positions angulaires intermédiaires, dites positions « Marche » et « Accessoires » et une deuxième position angulaire extrême active, opposée à la première position angulaire extrême neutre, dite position « Démarrage ».

Les positions « Neutre », « Intermédiaires » et « Démarrage » se succèdent lorsque le rotor 10 est déplacé de la position «Neutre» vers la position «Démarrage». Après son passage par la position démarrage, le rotor 10 est élastiquement ramené par un ressort de rappel vers sa position intermédiaire « Marche ».

Le moyen de verrouillage comporte un pêne 24 monté mobile entre une position escamotée dans laquelle le pêne 24 est maintenu à distance d'une colonne de direction (non représentée) et une position de saillie, comme illustrée sur la figure 1, dans laquelle il bloque la colonne de direction du véhicule automobile.

Pour cela, la came 12 est destinée à être solidaire en rotation du rotor, de sorte que la rotation du rotor 10 permette de contrôler la translation du pêne 24.

Le pêne 24 est généralement en position de saillie dans la colonne de direction lorsque le rotor 10 est en position neutre, le pêne 24 étant maintenu rentré, en position escamotée, dans les autres positions angulaires du rotor 10. Le pêne 24 est sollicité en poussé en position de saillie par un ressort de pêne.

L'élément élastique 14 est agencé coaxialement entre la came 12 et le rotor 10 pour solliciter axialement ledit rotor 10 en poussée. Par exemple l'élément élastique 14 est un ressort de compression. Le rotor 10 est ainsi en liaison glissière avec la came 12, c'est-à-dire que le rotor 10 est lié en rotation avec la came 12 mais pas en translation, l'élément élastique 14 repoussant le rotor 10 en position non enfoncée.

En outre, le rotor 10 comprend une collerette annulaire 26.

Selon l'invention, l'ouverture 18 est conformée pour que sa coopération avec la collerette annulaire 26 bloque la rotation du rotor 10 dans un sens de rotation prédéterminé à partir d'une position angulaire prédéterminée et autorise la rotation du rotor 10 au-delà de la position angulaire prédéterminée par enfoncement préalable du rotor.

Selon un mode de réalisation de l'invention, la position angulaire prédéterminée est une position angulaire intermédiaire, par exemple la position « Marche », disposée entre une position angulaire extrémale neutre, position « Stop » et une position extrémale angulaire active, position « Démarrage ».

Par ce moyen, la clé ne peut pas être extraite du verrou 6 par un simple mouvement de retrait en position « Stop ». Il est nécessaire d'enfoncer préalablement la clé dans le verrou 6 pour pouvoir ensuite l'en extraire. On prévient ainsi toute extraction intempestive ou malveillante de la clé, notamment en raison du danger que l'extraction de la clé représente lorsque le véhicule est en marche.

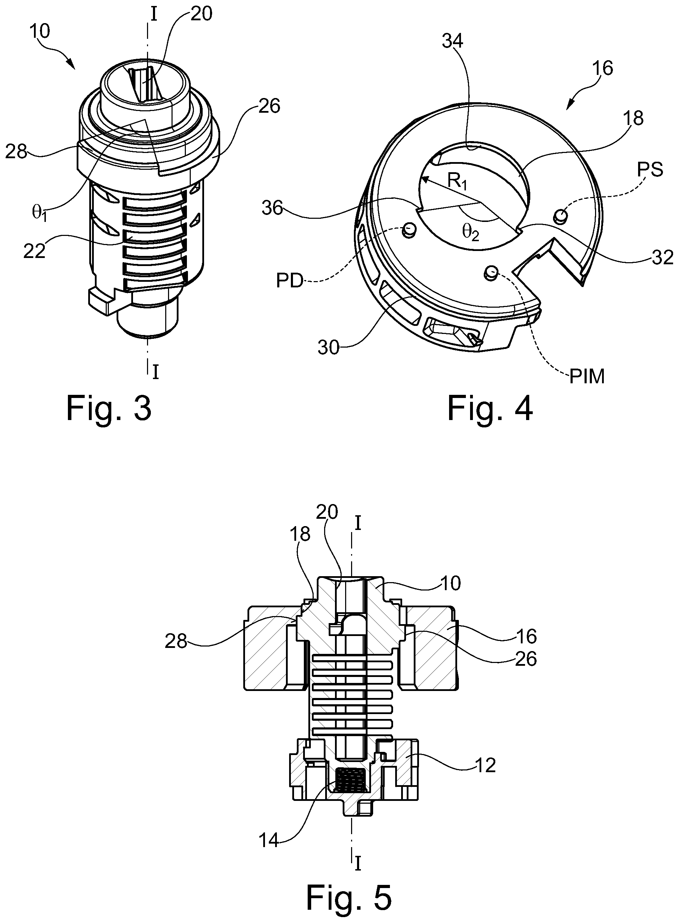

Selon un mode de réalisation préféré visible sur les figures 3 et 4, la collerette annulaire 26 comprend une extension 28 qui s'étend axialement vers la tête du rotor 10 sur un premier secteur angulaire d'angle θ1.

En outre, l'ouverture 18 est sensiblement circulaire de rayon R1 et comporte un dégagement 30 pour autoriser le passage de l'extension 28 de la collerette annulaire 26. Le dégagement 30 s'étend radialement vers l'extérieur de l'ouverture 18 sur un second secteur angulaire d'angle noté θ2. En d'autres termes, sur le second secteur angulaire d'angle noté θ2, l'ensemble formé par l'ouverture 18 et le dégagement 30 est sensiblement circulaire de rayon R2 strictement supérieur au rayon R1. L'angle θ2 est au moins égale à l'angle θ1.

Le dégagement 30 comporte également une butée radiale 32 conformée pour bloquer la rotation du rotor 10, lors de la rotation du rotor 10 dans le sens anti-horaire à partir de la position angulaire prédéterminée.

De plus, le dégagement 30 est conformé pour que sa coopération avec la collerette annulaire 26 retienne axialement le rotor 10 dans la tête du stator 16. A cet effet, la tête de stator 16 présente une butée axiale 34 située du côté de l'avant du rotor. La butée axiale 34 est conformée pour retenir axialement le rotor 10 dans la tête de stator 16 tout en permettant l'enfoncement du rotor 10.

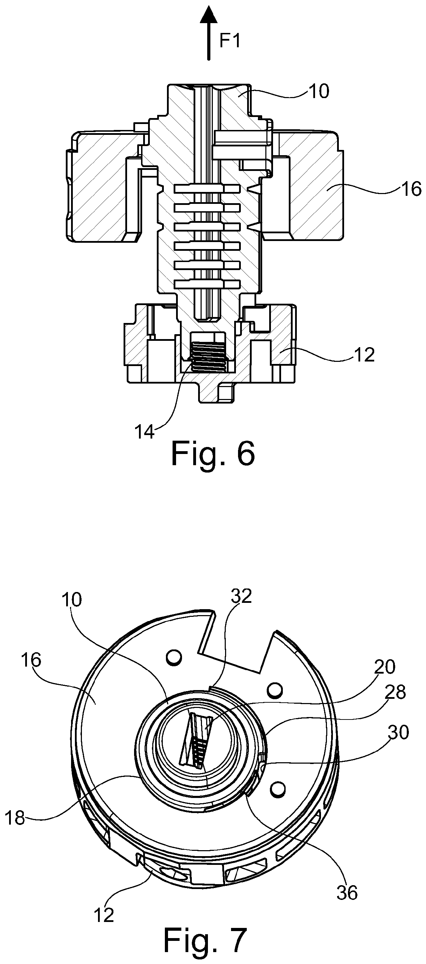

En d'autres termes :
- lorsque l'extension 28 de la collerette annulaire 26 n'est pas en face du dégagement 30, le rotor est retenu en translation dans une position dite « rentrée » comme illustré sur la figure 5, et
- lorsque l'extension 28 de la collerette annulaire 26 est en face du dégagement 30, le rotor est poussé par l'élément élastique 14 et par conséquent translate selon l'axe I-I dans une position dite « sortie » comme illustré sur les figures 6 et 7.

Selon un autre mode de réalisation, l'ouverture est en outre conformée pour que sa coopération avec la collerette annulaire 26 autorise la rotation du rotor dans un sens de rotation contraire au sens de rotation prédéterminé jusqu'à une position extrémale active, telle que la position « Démarrage ». Ainsi, selon l'invention, l'angle θ2 est supérieur à l'angle θ1 autorisant une rotation du rotor 10 dans le sens horaire entre la position « Marche » et la position « Démarrage », c'est-à-dire lorsque le rotor 10 est en position « sortie ».

Le dégagement 30 comporte en outre une butée radiale supplémentaire 36 correspondant à la position « Démarrage » conformée pour bloquer la rotation du rotor 10 dans le sens de rotation contraire au sens de rotation prédéterminé, c'est-à-dire le sens horaire au-delà de la position « Démarrage ».

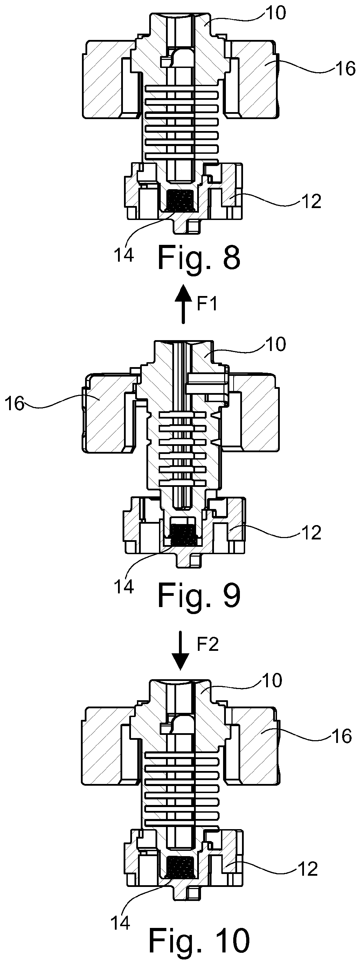

Un exemple de fonctionnement du verrou va maintenant être décrit en référence aux figures 8 à 10.

On suppose en référence à la figure 8, que le véhicule est à l'arrêt et que le conducteur introduit la clé (non représentée) dans le rotor 10 suivant l'axe I-I pour mettre en marche le véhicule. Le verrou 6 est alors dans la position angulaire « Stop » indiquée PS sur la figure 4. Le rotor est en position « rentrée ».

Puis, l'utilisateur commence à tourner la clé dans le sens de rotation horaire, faisant tourner le rotor 10 dans la tête de stator 16. Tant que le verrou 6 n'a pas atteint la position angulaire prédéterminée, par exemple la position intermédiaire « Marche » PIM, le rotor 10 reste en position « rentrée ».

Lorsque le rotor 10 atteint la position intermédiaire prédéterminée par exemple « Marche » PIM (figure 9), le rotor 10 translate en position « sortie » sous l'action du ressort 14 selon la flèche F1 (figure 9). La butée axiale 34 retient axialement le rotor 10 dans la tête de stator 16 dans cette position « sortie ».

Dès que le rotor 10 est dans cette position « sortie », l'extraction de la clé est impossible.

La rotation du rotor 10 peut être poursuivie dans le sens horaire jusqu'à la position « Démarrage ». Entre la position angulaire prédéterminée, ici la position intermédiaire « Marche » et la position angulaire « Démarrage », le rotor 10 reste en position « sortie » sous l'action du ressort 14 et est retenu dans la tête de stator 16 par la butée axiale 34.

La rotation du rotor 10 dans le sens horaire est interdite au-delà de la position « Démarrage » par la mise en butée de l'extension 28 de la collerette 26 contre la butée radiale 36.

Après le démarrage moteur en position « Démarrage », le verrou revient automatiquement en position « Marche », le rotor étant toujours en position « Sortie » au cours de sa rotation dans le sens anti-horaire.

A partir de la position angulaire prédéterminée, la position « Marche » dans cet exemple, lorsque le conducteur tourne la clé en sens inverse (sens de rotation anti-horaire), la rotation du rotor 10 est interdite par la mise en butée de l'extension 28 de la collerette 26 contre la butée radiale 32. Il n'est donc pas possible de faire tourner le rotor 10 à partir de la position intermédiaire « Marche » PIM pour lui faire regagner la position « Stop » et ôter la clé.

Dans cette position de butée, le conducteur doit alors enfoncer le rotor 10 dans la tête de stator 16 (flèche F2 sur la figure 10), permettant le franchissement de la butée radiale 32 par l'extension 28 de la collerette 26.

Avant d'atteindre la position « Stop » PS, le rotor 10 retourne en position initiale « rentrée » (figure 8) jusqu'à mise en butée de l'extension 28 de la collerette 26 contre la butée axiale 34.

Puis le conducteur continue de tourner le rotor 10 pour atteindre la position stop dans laquelle le conducteur peut alors extraire la clé du verrou 6.

## Revendications

1. Verrou (6) pour antivol de colonne de direction de véhicule automobile comprenant :
- un stator (8) comprenant une tête de stator (16) dans laquelle est ménagée une ouverture (18),
- un rotor (10) monté mobile en rotation par rapport au stator (8) autour d'un axe et comprenant une collerette annulaire (26),
- une came (12) destinée à être solidaire en rotation du rotor (10),
- un élément élastique (14) agencé entre la came (12) et le rotor (10) pour solliciter axialement ledit rotor en poussée,
dans lequel l'ouverture (18) est conformée pour que sa coopération avec la collerette annulaire (26) bloque la rotation du rotor (10) dans un sens de rotation prédéterminé à partir d'une position angulaire prédéterminée et autorise la rotation du rotor (10) au-delà de la position angulaire prédéterminée par enfoncement préalable du rotor (10), dans lequel :
- la collerette annulaire (26) comprend une extension (28) qui s'étend axialement vers la tête du rotor (10) destinée à recevoir un insert sur un premier secteur angulaire, et
- l'ouverture (18) est sensiblement circulaire et comporte un dégagement (30) pour autoriser le passage de l'extension (28) de la collerette annulaire (26), le dégagement (30) s'étendant radialement vers l'extérieur de l'ouverture (18) sur un second secteur angulaire et étant conformé pour que sa coopération avec la collerette annulaire (26) retienne axialement le rotor (10) dans la tête du stator (16).

2. Verrou selon l'une quelconque des revendications précédentes, dans lequel la position angulaire prédéterminée est une position angulaire intermédiaire disposée entre une position angulaire extrémale neutre et une position extrémale angulaire active.

3. Verrou selon l'une quelconque des revendications précédentes, dans lequel l'ouverture (18) est conformée pour que sa coopération avec la collerette annulaire (26) autorise la rotation du rotor (10) dans un sens de rotation contraire au sens de rotation prédéterminé jusqu'à une position angulaire extrémale active, telle que la position démarrage.

4. Antivol (2) de colonne de direction pour véhicule automobile, **caractérisé en ce qu'**il comporte au moins un verrou (6) selon l'une quelconque des revendications précédentes précédentes.

## Patentansprüche

1. Riegel (6) für eine Diebstahlsicherungsvorrichtung einer Lenksäule eines Kraftfahrzeugs, umfassend:
- einen Stator (8), umfassend einen Statorkopf (16), in den eine Öffnung (18) eingearbeitet ist,
- einen Rotor (10), der im Verhältnis zum Stator (8) um eine Achse drehbeweglich montiert ist, und einen ringförmigen Kragen (26) umfasst,
- einen Nocken (12), der dazu bestimmt ist, drehfest mit dem Rotor (10) verbunden zu sein,
- ein elastisches Element (14), das zwischen dem Nocken (12) und dem Rotor (10) angeordnet ist, um den Rotor axial mit einem Schub zu beaufschlagen,
wobei die Öffnung (18) angepasst ist, damit deren Zusammenwirken mit dem ringförmigen Kragen (26) die Drehung des Rotors (10) in eine vorbestimmte Drehrichtung ausgehend von einer vorbestimmten Winkelposition blockiert, und die Drehung des Rotors (10) über die vorbestimmte Winkelposition hinaus durch vorheriges Eindrücken des Rotors (10) freigibt, wobei:
- der ringförmige Kragen (26) eine Erweiterung (28) umfasst, die sich axial zum Kopf des Rotors (10) erstreckt, der dazu bestimmt ist, einen Einsatz in einem ersten Winkelsektor aufzunehmen, und
- die Öffnung (18) im Wesentlichen kreisförmig ist und eine Ausnehmung (30) zum Freigeben des Durchgangs der Erweiterung (28) des ringförmigen Kragens (26) beinhaltet, wobei sich die Ausnehmung (30) radial nach außerhalb der Öffnung (18) über einen zweiten Winkelsektor erstreckt, und angepasst ist, damit deren Zusammenwirken mit dem ringförmigen Kragen (26) den Rotor (10) axial in dem Kopf des Stators (16) zurückhält.

2. Riegel nach einem der vorstehenden Ansprüche, wobei die vorbestimmte Winkelposition eine Winkelzwischenposition ist, die zwischen einer extremen neutralen Winkelposition und einer extremen aktiven Winkelposition angeordnet ist.

3. Riegel nach einem der vorstehenden Ansprüche, wobei die Öffnung (18) angepasst ist, damit deren Zusammenwirken mit dem ringförmigen Kragen (26) die Drehung des Rotors (10) in eine entgegengesetzte Drehrichtung zur vorbestimmten Drehrichtung bis zu einer extremen aktiven Winkelposition, wie der Startposition, freigibt.

4. Diebstahlsicherungsvorrichtung (2) einer Lenksäule eines Kraftfahrzeugs, **dadurch gekennzeichnet, dass** sie mindestens einen Riegel (6) nach einem der vorstehenden Ansprüche beinhaltet.

## Claims

1. An antitheft lock (6) for a motor vehicle steering column comprising:
- a stator (8) comprising a stator head (16) in which an opening (18) is formed,
- a rotor (10) mounted movable in rotation relative to the stator (8) about an axis and comprising an annular collar (26),
- a cam (12) intended to be secured in rotation to the rotor (10),
- an elastic element (14) arranged between the cam (12) and the rotor (10) for axially urging said rotor in thrust,
wherein the opening (18) is shaped so that its cooperation with the annular collar (26) blocks the rotation of the rotor (10) in a predetermined direction of rotation from a predetermined angular position and authorizes the rotation of the rotor (10) beyond the predetermined angular position by prior pushing of the rotor (10), in which:
- the annular collar (26) comprises an extension (28) which extends axially towards the head of the rotor (10) intended to receive an insert over a first angular sector, and
- the opening (18) is substantially circular and includes a clearance (30) to authorize the passage of the extension (28) of the annular collar (26), the clearance (30) extending radially outwardly of the opening (18) over a second angular sector and being shaped so that its cooperation with the annular collar (26) axially retains the rotor (10) within the head of the stator (16).

2. The lock according to any one of the preceding claims, wherein the predetermined angular position is an intermediate angular position disposed between a neutral extremal angular position and an active extremal angular position.

3. The lock according to any one of the preceding claims, wherein the opening (18) is shaped so that its cooperation with the annular collar (26) authorizes the rotation of the rotor (10) in a direction of rotation opposite to the predetermined direction of rotation up to an active extremal angular position, such as the start position.

4. An antitheft (2) of a steering column for a motor vehicle, **characterized in that** it includes at least one lock (6) according to any one of the preceding claims.
